# EUROPEAN PATENT APPLICATION

(11) **EP 4 800 748 A1**
(43) Date of publication of application: **02.09.2026**
(21) Application number: 24884276.7
(22) Date of filing: 14.09.2024
(51) Int. Cl.: H01M 4/13, H01M 10/052

(54) **POSITIVE ELECTRODE SHEET, LITHIUM BATTERY, AND DEVICE**

(30) Priority: 31.10.2023 CN 202311440645
(71) Applicant: BYD Company Limited, Shenzhen, Guangdong 518118 (CN)
(72) Inventor: LIU, Zhengjiao, Shenzhen, Guangdong 518118 (CN); QIU, Zhaozheng, Shenzhen, Guangdong 518118 (CN); PAN, Yi, Shenzhen, Guangdong 518118 (CN)
(74) Representative: Taor, Simon Edward William
(86) International application number: PCT/CN2024/118955
(87) International publication number: WO 2025/092269

(57) **Abstract**

The present invention provides a positive electrode sheet, a lithium battery, and a device. The positive electrode sheet comprises a positive electrode current collector, and a bottom coating and a positive electrode coating that are sequentially stacked on at least one side of the positive electrode current collector, wherein the bottom coating contains a first positive electrode lithium supplementing agent, and the positive electrode coating contains a positive electrode active material and a second positive electrode lithium supplementing agent, the first coulombic efficiency of the first positive electrode lithium supplementing agent is less than 30% and the second positive electrode lithium supplementing agent can decompose to generate gas under a voltage greater than a de-lithiation potential of the second positive electrode lithium supplementing agent. The first positive electrode lithium supplementing agent and the second positive electrode lithium supplementing agent are introduced into the positive electrode sheet at the same time, and are arranged in the layered manner as described above, so that many problems caused by using the two independently can be reduced, and the lithium supplementing utilization rate of the first positive electrode lithium supplementing agent and that of the second positive electrode lithium supplementing agent are improved; and moreover, the battery impedance is not significantly increased, and the battery power performance is improved.

## Description

The present disclosure claims priority to Chinese Patent Application No. 202311440645.2, filed with the China National Intellectual Property Administration on October 31, 2023 and entitled "POSITIVE ELECTRODE SHEET, LITHIUM BATTERY, AND APPARATUS", which is incorporated herein by reference in its entirety.

### TECHNICAL FIELD

The present disclosure relates to the field of lithium ion battery technologies, and specifically, to a positive electrode sheet, a lithium battery, and an apparatus.

### BACKGROUND

During first charging of a lithium battery, a solid-state electrolyte membrane (SEI membrane for short) is formed on a surface of a negative electrode, which consumes active lithium ions released from a positive electrode and reduces initial coulombic efficiency and an energy density of the battery. To compensate for irreversible consumption of active lithium during the first charging, a measure taken in the industry is to pre-add a lithium supplementing agent that can provide active lithium ions to the lithium battery. Lithium supplementation modes for the battery are usually classified into positive electrode lithium supplementation and negative electrode lithium supplementation. Compared with the negative electrode lithium supplementation mode in which metal lithium with high chemical activity is directly press-fitted with a negative electrode sheet to implement pre-lithiation, the positive electrode lithium supplementation has higher safety and good compatibility with an existing battery preparation process.

A positive electrode lithium supplementation technology is to introduce a positive electrode lithium supplementing agent with a large reversible delithiation amount into a positive electrode of a battery. Positive electrode lithium supplementing agents are mainly classified into two types. A first type is a lithium-rich material with very low initial coulombic efficiency. After lithium ions are released at a specific voltage, a part of a main structure or a delithiation product remains on a positive electrode side. A second type is a sacrificial lithium supplementing agent that can be decomposed to generate lithium ions and gas at a specific voltage. However, separate use of each of these two types of positive electrode lithium supplementing agents in the lithium battery has some problems. For example, a positive electrode active material is all mixed with the first type of positive electrode lithium supplementing agent at one layer. This significantly increases liquid-phase diffusion impedance of the positive electrode, and reduces power performance of the battery. For example, a positive electrode coating formed by mixing the second type of positive electrode lithium supplementing agent and a positive electrode active material is in direct contact with a positive electrode current collector. It is difficult to smoothly discharge all gas generated by decomposition of such a lithium supplementing agent, and residual gas reduces utilization of the lithium supplementing agent. This also increases impedance of the battery, and reduces power performance of the battery.

Therefore, it is necessary to develop a technical solution that can practically improve a positive electrode lithium supplementation effect without affecting exertion of electrochemical performance of a lithium battery after lithium supplementation.

### SUMMARY

In view of this, the present disclosure introduces both the foregoing lithium supplementing material with low initial coulombic efficiency and the foregoing lithium supplementing material that can be decomposed to generate gas into a positive electrode of a battery, and distributes the two lithium supplementing materials at appropriate distribution positions, so that an adverse effect caused by using only a single lithium supplementing agent can be reduced, and utilization of the two types of lithium supplementing agents is fully exerted. In addition, impedance of the battery is not significantly increased, and power performance of the battery is improved.

Specifically, a first aspect of the present disclosure provides a positive electrode sheet, which includes a positive electrode current collector and a coating structure arranged on at least one side of the positive electrode current collector. The coating structure includes a first lithium supplementing layer, a positive electrode active material layer, and a second lithium supplementing layer that are sequentially laminated, and the first lithium supplementing layer is close to the positive electrode current collector. The first lithium supplementing layer includes a first positive electrode lithium supplementing agent, the positive electrode active material layer includes a first positive electrode active material, and the second lithium supplementing layer includes a second positive electrode lithium supplementing agent and a second positive electrode active material. Initial coulombic efficiency of the first positive electrode lithium supplementing agent is less than 30%, and the second positive electrode lithium supplementing agent is decomposable to release lithium ions and generate gas.

In the positive electrode sheet in this embodiment of the present disclosure, the first positive electrode lithium supplementing agent and the second positive electrode lithium supplementing agent are both introduced, and are arranged in a layered manner as described above, and the positive electrode active material layer is arranged between two lithium supplementing layers that respectively contain the first positive electrode lithium supplementing agent and the second positive electrode lithium supplementing agent, so that high structural stability of the entire coating structure can be ensured, many problems caused by separately using the two types of positive electrode lithium supplementing agents can be reduced, lithium supplementation utilization of the two types of positive electrode lithium supplementing agents can be improved, and an energy density of the battery can be effectively improved. In addition, the battery has relatively low impedance and relatively good power performance.

According to a second aspect, the present disclosure provides a lithium battery. The lithium battery includes the positive electrode sheet according to the first aspect of the present disclosure.

Because the positive electrode sheet is used, utilization of two types of lithium supplementing agents in the lithium battery is high, a total amount of reversible lithium of the battery is large, and an energy density is improved. In addition, the battery has low impedance and good power performance.

According to a third aspect, the present disclosure provides an apparatus including the lithium battery according to the second aspect of the present disclosure. The apparatus is a power-consuming device or an energy storage system.

### BRIEF DESCRIPTION OF DRAWINGS

FIG. 1A and FIG. 1B are schematic structural diagrams of a positive electrode sheet according to the present disclosure; and
FIG. 2 is another schematic structural diagram of a positive electrode sheet according to the present disclosure.

### DESCRIPTION OF EMBODIMENTS

The following describes technical solutions in embodiments of the present disclosure with reference to accompanying drawings.

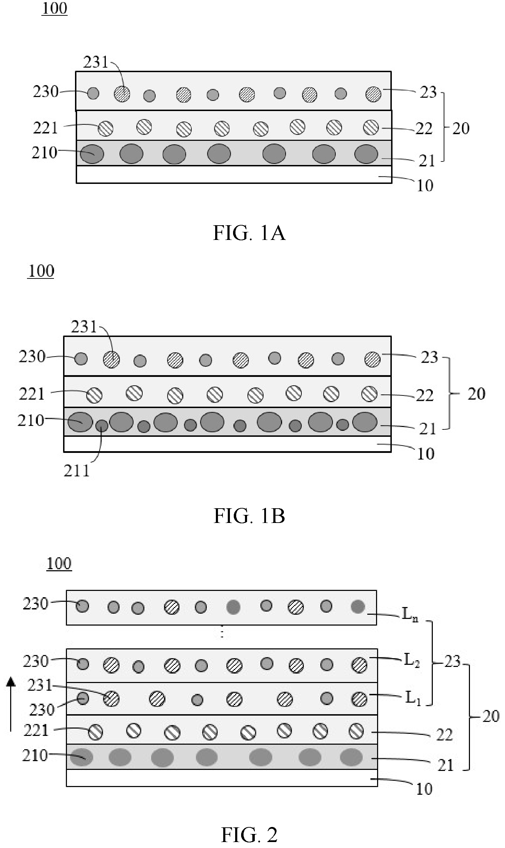

Refer to FIG. 1A and FIG. 1B together. An embodiment of the present disclosure provides a positive electrode sheet 100, which includes a positive electrode current collector 10 and a coating structure 20 arranged on at least one side of the positive electrode current collector 10. The coating structure 20 includes a first lithium supplementing layer 21, a positive electrode active material layer 22, and a second lithium supplementing layer 23 that are sequentially laminated, and the first lithium supplementing layer 21 is close to the positive electrode current collector 10. The first lithium supplementing layer 21 includes a first positive electrode lithium supplementing agent 210, and the positive electrode active material layer 22 includes a first positive electrode active material 221. The second lithium supplementing layer 23 includes a second positive electrode lithium supplementing agent 230 and a second positive electrode active material 231. Initial coulombic efficiency of the first positive electrode lithium supplementing agent 210 is less than 30%. The second positive electrode lithium supplementing agent 230 can be decomposed to release lithium ions and generate gas.

The positive electrode sheet 100 contains two types of positive electrode lithium supplementing agents, the first positive electrode lithium supplementing agent 210 having low initial coulombic efficiency is arranged close to the positive electrode current collector 10 as a primer coating, and the positive electrode active material layer 22 is arranged above the first positive electrode lithium supplementing agent 210, so that a bonding force between the positive electrode active material layer 22 and the positive electrode current collector 10 can be increased, and a peeling force of the electrode sheet can be improved. In addition, because the positive electrode active material layer 22 covers the first lithium supplementing layer 21 containing the first positive electrode lithium supplementing agent 210, a moisture absorption rate of the first positive electrode lithium supplementing agent 210 having high water absorption performance can be reduced, so that a requirement for managing and controlling ambient humidity when the positive electrode sheet 100 is prepared is increased, device investment needed for humidity control is reduced, and manufacturing costs are reduced. In addition, compared with that of an electrode sheet in which a lithium supplementing material is only the first positive electrode lithium supplementing agent, an addition amount of the first positive electrode lithium supplementing agent in the positive electrode sheet in the present disclosure is relatively small in a case that a total lithium supplementing amount remains unchanged. Even when the first lithium supplementing layer 21 further contains the positive electrode active material, because a reduction in a compaction density of the electrode sheet caused by the positive electrode active material is relatively small, the battery has relatively low impedance and relatively good power.

A layer containing the positive electrode active material and the second positive electrode lithium supplementing agent 230 that can be decomposed to generate gas is away from the positive electrode current collector 10, that is, located on a surface layer of the positive electrode sheet 100, so that a discharge path of the gas released by decomposition of the second positive electrode lithium supplementing agent 230 is shortened, which is more conducive to gas discharge. In this way, in a decomposition process of the second positive electrode lithium supplementing agent 230, a polarization probability of the battery is reduced, and a decomposition proportion and utilization of the second positive electrode lithium supplementing agent 230 are improved. In addition, an amount of gas remaining in the positive electrode sheet 100 is relatively small, and the impedance of the battery is reduced. Further, porosity of the second lithium supplementing layer 23 can be increased after the second positive electrode lithium supplementing agent 230 is decomposed. Finally, a high-power discharge capability and a continuous discharge capability of the battery are improved.

In the present disclosure, the second positive electrode lithium supplementing agent can only be decomposed to release lithium ions. Because a main structure does not exist after the second positive electrode lithium supplementing agent is decomposed to release lithium ions and gas, but the lithium ions cannot be intercalated back into the second positive electrode lithium supplementing agent, this type of lithium supplementing agent may also be referred to as a sacrificial lithium supplementing agent. After lithium ions are released from the first positive electrode lithium supplementing agent at a relatively high voltage, a part of a main structure or a delithiation product remains in a positive electrode, and there is a specific capability of intercalating back the lithium ions. However, the capability of intercalating back the lithium ions of the first positive electrode lithium supplementing agent is relatively poor. That is, a capability of reversibly releasing/intercalating lithium ions is relatively poor, and initial coulombic efficiency is relatively low (less than 30%), and is far lower than initial coulombic efficiency of a conventional positive electrode active material (which is usually greater than 60%). The initial coulombic efficiency of the first positive electrode lithium supplementing agent can be learned from a ratio of a first-cycle discharge capacity to a first-cycle charge capacity of a button cell manufactured by using the first positive electrode lithium supplementing agent as a positive electrode active material. Specifically, a test condition of the initial coulombic efficiency of the first positive electrode lithium supplementing agent is as follows: A specification of the button cell is CR2032. Positive electrode foil is carbon-coated aluminum foil. A positive electrode formula is that lithium supplementing agent : conductive agent : binder=8:1:1 (mass ratio). A negative electrode is a metal lithium sheet. A separator is a PP separator with a thickness of 14 µm. An electrolyte is a mixed solvent of 1M LiPF₆ dissolved in EC/DMC/DEC/EMC=1:1:1:1 (volume ratio). Charging to 4.5 V is performed at 0.1 C, and discharging to 2.0 V is performed at 0.1 C. The first-cycle discharge capacity/the first-cycle charge capacity is the initial coulombic efficiency.

In an implementation of the present disclosure, the first positive electrode lithium supplementing agent 210 may be selected from one or more of Li₆CoO₄, Li₂MoO₃, Li₅FeO₄, Li₆MnO₄, Li₂NiO₂, Li₂CuO₂, Li₃PO₄, Li₄SiO₄, Li₂SiO₃, Li₃VO₄, Li₂VO₃, Li₅ReO₆, Li₂RuO₃, Li₂MnO₃, Li₂MoO₃, Li₂S, LiF, and the like, but is not limited thereto. A surface of the first positive electrode lithium supplementing agent may have or may not have a conductive coating layer, and preferably has the conductive coating layer. In an implementation of the present disclosure, the second positive electrode lithium supplementing agent 230 may be selected from one or more of Li₂CO₃, Li₃N, Li₂O₂, Li₂O, Li₂C₂O₄, Li₂C₄O₄, Li₂C₃O₅, Li₂C₄O₆, and the like, but is not limited thereto.

It should be noted that the first positive electrode active material 221 and the second positive electrode active material 231 may be the same positive electrode active material or different positive electrode active materials. For ease of description in the present disclosure, different names/reference numerals are used for differentiation. In an implementation of the present disclosure, each positive electrode active material may be selected from one or more of lithium iron phosphate (LFP), lithium manganese iron phosphate (LMFP), lithium manganate (LMO), lithium cobalt oxide, a material of lithium nickel manganese oxide (LNMO), a ternary material of lithium nickel cobalt manganese oxide (NCM), a ternary material of lithium nickel cobalt aluminum oxide (NCA), a material of lithium-rich manganese oxide, and the like. These positive electrode active materials may be undoped or doped and modified, and may have or may not have a conductive coating layer on a surface. Generally, materials of lithium iron phosphate and lithium manganese iron phosphate usually have a conductive carbon coating layer.

In the present disclosure, the first lithium supplementing layer 21 may not include a positive electrode active material (as shown in FIG. 1A), or may include a positive electrode active material (as shown in FIG. 1B, which may be represented by a reference numeral 211). For a material selection range of the positive electrode active material 211, refer to descriptions of the first positive electrode active material 221 and the second positive electrode active material 231 above in the present disclosure.

In some implementations of the present disclosure, the first lithium supplementing layer 21 includes a third positive electrode active material whose mass percent does not exceed (that is, is less than or equal to) that of the first positive electrode lithium supplementing agent. The third positive electrode active material is not excessively introduced, so that a reduction in a compaction density of the positive electrode sheet caused by same-layer distribution of the third positive electrode active material and the first positive electrode lithium supplementing agent 210 can be reduced, and the battery has relatively low impedance and relatively good power.

In some implementations of the present disclosure, the first lithium supplementing layer 21 may include components in the following mass percents: 50% to 90% of the first positive electrode lithium supplementing agent 210, 0% to 40% of the third positive electrode active material, 0.5% to 10% of a binder, and 0.5% to 10% of a conductive agent. Existence of the third positive electrode active material whose mass proportion does not exceed 40% better helps ensure that the compaction density of the positive electrode sheet is relatively high and the impedance of the battery is relatively low. Existence of the binder with an appropriate amount can ensure adhesion of the first lithium supplementing layer 21 to the positive electrode current collector 10, and existence of the conductive agent with an appropriate amount helps improve an electron conduction capability of the first lithium supplementing layer 21. Specifically, the mass percent of the first positive electrode lithium supplementing agent 210 in the first lithium supplementing layer 21 may be 50%, 55%, 60%, 65%, 70%, 75%, 80%, 85%, 90%, or the like. The mass percent of the binder or the conductive agent may be 0.8%, 1%, 1.5%, 2%, 2.5%, 3%, 4%, 4.5%, 5%, 6%, 7%, 8%, 9%, or the like.

In some implementations of the present disclosure, the first lithium supplementing layer 21 contains the third positive electrode active material, and a mass percent of the third positive electrode active material may be 10% to 40%, for example, is specifically 12%, 15%, 20%, 25%, 28%, 30%, 35%, 40%, or the like. The first lithium supplementing layer 21 contains an appropriate amount of third positive electrode active material, so that the first lithium supplementing layer 21 can contribute a specific capacity in a formed battery. In addition, the positive electrode active material contained in the first lithium supplementing layer 21 helps control coating accuracy and improve process stability.

In some other implementations of the present disclosure, the first lithium supplementing layer 21 does not contain the third positive electrode active material, that is, content of the third positive electrode active material in the first lithium supplementing layer 21 is 0. In this case, it may still be considered that the mass percent of the first positive electrode lithium supplementing agent 210 is greater than that of the third positive electrode active material in the first lithium supplementing layer 21 (that is, the mass percent of the third positive electrode active material is less than or equal to the mass percent of the first positive electrode lithium supplementing agent in the first lithium supplementing layer). The first lithium supplementing layer 21 does not contain the third positive electrode active material, so that viscosity of slurry used to form the first lithium supplementing layer 21 is more appropriate and coating is easier, and the compaction density of the positive electrode sheet is relatively high, thereby avoiding a reduction in impedance and power performance of the battery.

In some implementations of the present disclosure, content of a positive electrode lithium supplementing agent in the positive electrode active material layer 22 is less than or equal to 1%. In some embodiments of the present disclosure, the positive electrode active material layer 22 may not contain the positive electrode lithium supplementing agent. In this way, a problem of difficulty in slurry coating caused by same-layer arrangement of the positive electrode active material and the positive electrode lithium supplementing agent can be avoided, and a problem that the compaction density of the electrode sheet is reduced due to a low degree of matching between particle sizes of the positive electrode active material and the positive electrode lithium supplementing agent can be avoided.

In some implementations of the present disclosure, a ratio of a single-sided areal density of the first lithium supplementing layer 21 to a single-sided areal density of the coating structure 20 is 0.01 to 0.2. In this way, the first positive electrode lithium supplementing agent can achieve a good lithium supplementation effect, and it can be ensured that a reversible capacity of the battery is relatively high, so that an energy density is relatively high. In some implementations of the present disclosure, a ratio of a single-sided areal density of the positive electrode active material layer 22 to the single-sided areal density of the coating structure 20 is 0.1 to 0.9. In some implementations of the present disclosure, a ratio of a single-sided areal density of the second lithium supplementing layer 23 to the single-sided areal density of the coating structure 20 is 0.1 to 0.9. This helps ensure that a preparation process of the positive electrode sheet is highly feasible, structural stability of the electrode sheet is high, the compaction density of the electrode sheet is high, and the energy density of the battery is high. Using the first lithium supplementing layer 21 as an example, the "single-sided areal density" herein is an areal density of a first lithium supplementing layer 21 on one side of the positive electrode current collector 10, rather than a sum of areal densities of two first lithium supplementing layers 21 located on two sides of the positive electrode current collector 10. Similarly, using the first lithium supplementing layer 21 as an example, the ratio of the single-sided areal density of the first lithium supplementing layer to the single-sided areal density of the coating structure is a ratio of an areal density of a first lithium supplementing layer 21 on one side of the positive electrode current collector 10 to an areal density of a coating structure on the side.

In some implementations of the present disclosure, the single-sided areal density of the first lithium supplementing layer 21 may be 0.5 to 20 g/m². In this way, it can be ensured that an addition amount of the first positive electrode lithium supplementing agent is appropriate, a lithium supplementation capacity of the first positive electrode lithium supplementing agent is appropriate, and comprehensive performance of the lithium battery is relatively good. In some implementations, the single-sided areal density of the first lithium supplementing layer 21 is 1 to 20 g/m², for example, is specifically 1.5 g/m², 2 g/m², 3 g/m², 4 g/m², 5 g/m², 6 g/m², 7 g/m², 8 g/m², 9 g/m², 10 g/m², 12 g/m², 15 g/m², 16 g/m², 18 g/m², or the like. This better helps the battery have both a high positive electrode gram capacity and high initial coulombic efficiency, and relatively high utilization of the lithium supplementing agent. In an implementation of the present disclosure, the single-sided areal density of each of the positive electrode active material layer 22 and the second lithium supplementing layer 23 is within a range of 10 to 500 g/m², for example, is specifically 25 g/m², 30 g/m², 50 g/m², 80 g/m², 100 g/m², 150 g/m², 200 g/m², 210 g/m², 220 g/m², 250 g/m², 300 g/m², 350 g/m², 400 g/m², 450 g/m², or the like. In some implementations, the single-sided areal density of each of the positive electrode active material layer 22 and the second lithium supplementing layer 23 is within a range of 100 to 500 g/m². This better helps the positive electrode active material layer 22 and the second lithium supplementing layer 23 provide a capacity in a formed battery.

In some implementations of the present disclosure, the single-sided areal density of the positive electrode active material layer 22 and/or the single-sided areal density of the second lithium supplementing layer 23 are/is greater than that of the first lithium supplementing layer 21. The positive electrode active material layer 22 and the second lithium supplementing layer 23 are main capacity providing layers of the battery, and have higher single-sided areal densities than the first lithium supplementing layer 21. This helps ensure that an energy density and a discharge capacity of the battery are relatively high. Correspondingly, a single-sided thickness of the positive electrode active material layer 22 and/or a single-sided thickness of the second lithium supplementing layer 23 are/is greater than a single-sided thickness of the first lithium supplementing layer 21. In an implementation of the present disclosure, the single-sided thickness of the first lithium supplementing layer 21 may be within a range of 0.1 to 100 µm. In some implementations, the single-sided thickness of the first lithium supplementing layer 21 is 1 to 20 µm, for example, is specifically 1.0 µm, 2.0 µm, 3.0 µm, 4.0 µm, 5.0 µm, 6.0 µm, 7.0 µm, 8.0 µm, 9 µm, 10 µm, 11 µm, 12 µm, 13 µm, 14 µm, 15 µm, 16 µm, 17 µm, 18 µm, or 19 µm. A relatively thin first lithium supplementing layer 21 helps ensure stable existence of the positive electrode active material layer 22 on the positive electrode current collector 10 without reducing a reversible capacity of the positive electrode sheet 100 and reducing an energy density of a cell, and ensure that the first lithium supplementing layer 21 contains an appropriate amount of first positive electrode lithium supplementing agent 210, thereby ensuring that a gas generation amount of the positive electrode sheet is relatively small during first charging of the battery. In an implementation of the present disclosure, the single-sided thickness of the positive electrode active material layer 22 or the second lithium supplementing layer 23 is 20 to 200 µm. An appropriately thick positive electrode active material layer 22 or second lithium supplementing layer 23 can ensure a relatively high energy density and a relatively high discharge capacity of the battery.

In some implementations of the present disclosure, a ratio of the single-sided areal density of the positive electrode active material layer 22 to the single-sided areal density of the second lithium supplementing layer 23 is within a range of 0.5 to 2.0. A mass ratio of the positive electrode active material to the second positive electrode lithium supplementing agent may be adjusted by adjusting the areal density ratio of the positive electrode active material layer 22 to the second lithium supplementing layer 23, to satisfy different requirements of different batteries for an energy density, a power density, a cycle life, and the like. Specifically, the ratio may be 0.6, 0.7, 0.8, 0.9, 1.0, 1.1, 1.2, 1.3, 1.4, 1.5, 1.6, 1.7, 1.8, 1.9, or the like.

In some implementations of the present disclosure, a total mass percent of the second positive electrode active material 231 is greater than a total mass percent of the second positive electrode lithium supplementing agent 230 in the second lithium supplementing layer 23. In this way, it can be ensured that after the second lithium supplementing layer 23 generates gas in a battery formation process, the entire second lithium supplementing layer 23 is not excessively affected in providing a capacity. In some implementations of the present disclosure, a total mass of the second positive electrode lithium supplementing agent is 0.5% to 10% of a total mass of the positive electrode active material in the second lithium supplementing layer 23, for example, is specifically 0.5%, 1%, 2%, 3%, 4%, 5%, 6%, 7%, 8%, 9%, or the like. In this way, it can be ensured that the second positive electrode lithium supplementing agent 230 supplements the battery for irreversible consumption of active lithium, and the positive electrode of the battery can have a small gas generation amount and a large reversible capacity. In some implementations, the mass proportion is 1% to 5%.

In some implementations of the present disclosure, a total mass proportion of the second positive electrode active material 231 in the second lithium supplementing layer 23 is greater than 80%, and preferably greater than 90%. This helps ensure that a reversible capacity provided by the second lithium supplementing layer 23 is relatively high, and further ensure that a reversible capacity of the entire positive electrode sheet is relatively high.

In an implementation of the present disclosure, the second lithium supplementing layer 23 may be one layer (as shown in FIG. 1A and FIG. 1B), or may be a plurality of layers (that is, quantity of layers ≥ 2, as shown in FIG. 2). When the second lithium supplementing layer 23 is one layer (as shown in FIG. 1A and FIG. 1B), the second lithium supplementing agent 230 may be evenly dispersed in the second positive electrode active material 231.

In some implementations of the present disclosure, when the second lithium supplementing layer 23 is a plurality of layers, as shown in FIG. 2, the second lithium supplementing layer 23 may include n second lithium supplementing sublayers, where n≥2. Each second lithium supplementing sublayer contains a second positive electrode lithium supplementing agent 230 and a second positive electrode active material 231. A mass ratio of the second lithium supplementing agent 230 to the second positive electrode active material 231 in each second lithium supplementing sublayer shows an increasing trend in a direction from the positive electrode current collector 10 to the first lithium supplementing layer 21 (a direction indicated by an arrow in FIG. 2).

For example, in the direction from the positive electrode current collector 10 to the first lithium supplementing layer 21, the sublayers of the second lithium supplementing layer 23 may be sequentially denoted as L₁, L₂, ..., and Lₙ. In this way, the first lithium supplementing layer 21, the first sublayer L₁ of the second lithium supplementing layer, the second sublayer L₂ of the second lithium supplementing layer, ..., and the n^{th} sublayer Lₙ of the second lithium supplementing layer are sequentially arranged on a surface of the positive electrode current collector 10. Sequentially, a mass ratio of the second positive electrode lithium supplementing agent 230 to the second positive electrode active material 231 in the first sublayer L₁ is denoted as X₁, a mass ratio of the second positive electrode lithium supplementing agent 230 to the second positive electrode active material 231 in the second sublayer L₂ is denoted as X₂, ..., and a mass ratio of the second positive electrode lithium supplementing agent 230 to the second positive electrode active material 231 in the n^{th} sublayer Lₙ is denoted as Xₙ. In this case, the foregoing increasing trend may be represented as: X₁≤X₂≤X₃...≤Xₙ, where Xₙ>X₁, and X₁>0. A specific layer-by-layer gradient increasing manner may be a non-sequential increase manner such as first increasing -> then unchanged -> then increasing, or first unchanged -> then increasing, or first unchanged -> then increasing -> then unchanged -> then increasing; or may be a layer-by-layer sequential increasing manner (for example, X₁<X₂<X₃...<Xₙ, where X₁>0).

The second positive electrode lithium supplementing agent 230 is decomposed at a voltage greater than a delithiation potential thereof to generate active lithium ions to supplement the battery, and release gas. Therefore, after decomposition, pores may be left at an original position of the second positive electrode lithium supplementing agent 230, thereby increasing porosity of each second lithium supplementing sublayer. In the present disclosure, the mass ratio of the second positive electrode lithium supplementing agent to the second positive electrode active material in each second lithium supplementing sublayer is controlled to show an increasing trend in a direction away from the positive electrode current collector 10. This helps construct a relatively smooth exhaust passage, and particularly helps smoothly discharge gas generated by decomposition of the second positive electrode lithium supplementing agent 230 in the second lithium supplementing sublayer close to the positive electrode current collector, reduce battery polarization, and make a delithiation potential of the second positive electrode lithium supplementing agent in each second lithium supplementing sublayer basically the same. Further, a decomposition proportion of the second positive electrode lithium supplementing agent in each sublayer is relatively high. In addition, the reduction of battery polarization also helps reduce overall impedance of the battery, and improve a continuous discharge capability of the battery. In addition, after the lithium supplementing agent is decomposed, pores created in each second lithium supplementing sublayer form a gradient pore structure, that is, a quantity of pores in the second lithium supplementing sublayer close to the positive electrode current collector 10 is relatively small and porosity is relatively small. Porosity of a second lithium supplementing sublayer farther away from the positive electrode current collector 10 is higher. The gradient pore structure helps increase overall porosity of the positive electrode sheet 100 and reduce pore tortuosity thereof, thereby reducing overall impedance of the battery and improving power performance of the battery.

In some embodiments, the foregoing increasing trend is sequentially increasing layer by layer. That is, in the n second lithium supplementing sublayers, the mass ratio of the second lithium supplementing agent 230 to the second positive electrode active material 231 in each second lithium supplementing sublayer sequentially increases layer by layer in the direction from the positive electrode current collector 10 to the first lithium supplementing layer 21. In this way, the gas generated by decomposition of the second positive electrode lithium supplementing agent in the second lithium supplementing layer 23 is more smoothly discharged, and after decomposition, the second lithium supplementing layer 23 is endowed with a pore structure in which porosity sequentially increases in an arrow direction. This is more conducive to reducing impedance of the battery.

In some implementations of the present disclosure, in the n second lithium supplementing sublayers, at least two adjacent layers satisfy: Aₘ/(Dₘ/Dₘ₋₁)-Aₘ₋₁≥5%, where Aₘ₋₁ is a mass ratio of a second positive electrode lithium supplementing agent in an (m-1)^{th} second lithium supplementing sublayer to the total second positive electrode lithium supplementing agent in the second lithium supplementing layer 23, Aₘ is a mass ratio of a second positive electrode lithium supplementing agent in an m^{th} second lithium supplementing sublayer to the total second positive electrode lithium supplementing agent in the second lithium supplementing layer 23, Dₘ₋₁ is a thickness of the (m-1)^{th} second lithium supplementing sublayer, Dₘ is a thickness of the m^{th} second lithium supplementing sublayer, m is any integer from 2 to n, and on a same side of the positive electrode current collector, the (m-1)^{th} second lithium supplementing sublayer is closer to the positive electrode current collector than the m^{th} second lithium supplementing sublayer. In other words, when thicknesses of the second lithium supplementing sublayers are approximately the same, at least two adjacent layers in the 1^{st} to n^{th} second lithium supplementing sublayers satisfy Aₘ-Aₘ₋₁≥5%, where m is an integer from 2 to n. In this way, after the second positive electrode lithium supplementing agent is decomposed, porosity of at least two adjacent second lithium supplementing sublayers can be relatively distinct. The foregoing gradient pore structure has a relatively good effect of reducing impedance of the battery and improving power performance. Further, in some implementations of the present disclosure, any two adjacent second lithium supplementing sublayers in the n second lithium supplementing sublayers satisfy: Aₘ/(Dₘ/Dₘ₋₁)-Aₘ₋₁≥5%. In some embodiments, Aₘ/(Dₘ/Dₘ₋₁)-Aₘ₋₁₁≥10%, for example, is 10%, 15%, 20%, 25%, 30%, 40%, 50%, 60%, or the like.

In some embodiments, when thicknesses of the second lithium supplementing sublayers are equal (that is, Dₘ/Dₘ₋₁=1), in the n second lithium supplementing sublayers, a difference between mass ratios of second positive electrode lithium supplementing agents in any two adjacent second lithium supplementing sublayers to the total second positive electrode lithium supplementing agent in the second lithium supplementing layer 23 is greater than 5%. In other words, when Dₘ/Dₘ₋₁=1, in the n second lithium supplementing sublayers, any two adjacent second lithium supplementing sublayers satisfy: Aₘ-Aₘ₋₁≥5%, where m is any integer from 2 to n. In this way, after battery formation is completed, porosity formed in the second lithium supplementing layer 23 sequentially increases layer by layer in a direction away from the positive electrode active material layer 22. This leads to a better effect of reducing impedance of the battery and improving power performance.

For example, if the mass ratio of the second positive electrode lithium supplementing agent in the first sublayer L₁ of the second lithium supplementing layer 23 to all the second positive electrode lithium supplementing agent in the second lithium supplementing layer 23 is denoted as A₁, the mass ratio of the second positive electrode lithium supplementing agent in the second sublayer L₂ to all the second positive electrode lithium supplementing agent in the second lithium supplementing layer 23 is denoted as A₂, ..., and the mass ratio of the second positive electrode lithium supplementing agent in the n^{th} sublayer Lₙ to all the second positive electrode lithium supplementing agent in the second lithium supplementing layer 23 is denoted as Aₙ, when thicknesses of the second lithium supplementing sublayers are equal, |A₂-A₁|, |A₃-A₂|, ..., and |Aₙ-Aₙ₋₁| are all greater than or equal to 5%, and are preferably greater than or equal to 10%. A₁ is greater than 0. If a total mass of all the second positive electrode lithium supplementing agent in the second lithium supplementing layer 23 is denoted as M, a mass of the second positive electrode lithium supplementing agent in the first sublayer L₁ is denoted as m₁, a mass of the second positive electrode lithium supplementing agent in the second sublayer L₂ is denoted as m₂, ..., and a mass of the second positive electrode lithium supplementing agent in the n^{th} sublayer Lₙ is denoted as mₙ, A₁=m₁/M, A₂=m₂/M, ..., and Aₙ=mₙ/M. In some embodiments, when n=2, A₁=20%, and A₂=80%; or A₁=30%, and A₂=70%; or A₁=40%, and A₂=60%; or A₁=45%, and A₂=55%. When n=3, A₁=23%, A₂=33%, and A₃=44%; or A₁=20%, A₂=30%, and A₃=50%; or A₁=10%, A₂=30%, and A₃=60%.

In an implementation of the present disclosure, a mass proportion of the second positive electrode active material in each second lithium supplementing sublayer is greater than 80%, and preferably greater than 90%. This helps ensure that a reversible capacity provided by each second lithium supplementing sublayer is relatively high, and further ensure that a reversible capacity of the entire positive electrode sheet is relatively high. In addition, in some implementations of the present disclosure, a single-sided areal density of each positive electrode coating may be equal or unequal. The first sublayer L₁ of the second lithium supplementing layer 23 is used as an example. Specifically, a ratio of the mass of the second positive electrode active material in the first sublayer L₁ to a total mass of the first sublayer L₁ is greater than 80%, and further greater than 90%.

In some embodiments of the present disclosure, n=2, and X₂>X₁. That is, the second lithium supplementing layer 23 includes two second lithium supplementing sublayers, where a mass ratio of a second lithium supplementing agent 230 to a second positive electrode active material 231 in a second lithium supplementing sublayer farther away from the positive electrode current collector 10 is greater than a mass ratio of a second lithium supplementing agent 230 to a second positive electrode active material 231 in a second lithium supplementing sublayer closer to the positive electrode current collector 10. In this way, while ensuring that the second lithium supplementing layer 23 has the foregoing effects, preparation of the second lithium supplementing layer 23 is relatively convenient and consumes short time.

In addition, it should be noted that the first lithium supplementing layer 21 may alternatively be a plurality of layers with a gradient composition change. The positive electrode active material layer 22 may alternatively be a plurality of layers with a gradient composition change.

In the present disclosure, the positive electrode active material layer 22 and the second lithium supplementing layer 23 each may further contain a conductive agent and a binder. The conductive agent in each coating may be selected from one or more of conductive carbon black (for example, acetylene black, Ketjen black, Super p, or 350G carbon black), a carbon nanotube (for example, a single-walled carbon nanotube or a multi-walled carbon nanotube), graphene, a graphite sheet, and the like. The binder in each coating may be selected from one or more of polyvinylidene fluoride (PVDF), polytetrafluoroethylene (PTFE), polyolefin (such as polyethylene (PE) or polypropylene (PP)), polyacrylonitrile (PAN), polyacrylic acid (PAA), polyimide (PI), styrene butadiene rubber (SBR), sodium carboxymethylcellulose (CMC), sodium alginate (SA), gelatin, a composite binder made of poly(3,4-ethylenedioxythiophene)-poly(styrene sulfonate) (PEDOT:PSS), and the like, but is not limited thereto. In some implementations, the first lithium supplementing layer 21, the positive electrode active material layer 22, and the second lithium supplementing layer 23 each may further contain one or more of dispersants. The dispersants each may be selected from one or more of polyvinylpyrrolidone (PVP), polyvinyl alcohol (PVA), and the like.

In the present disclosure, the positive electrode current collector 10 may include but is not limited to aluminum foil, aluminum alloy foil, a polymer membrane material plated with metallic aluminum, the foregoing material coated with carbon on a surface, or the like. In some implementations of the present disclosure, the positive electrode current collector 10 is aluminum foil. In the present disclosure, the coating structure 20 may be formed on a surface on one side of the positive electrode current collector 10 (as shown in FIG. 1A, FIG. 1B, and FIG. 2), or the coating structure 20 may be formed on each of surfaces on two opposite sides of the positive electrode current collector 10.

The first lithium supplementing layer 21 may be formed by coating and baking primer coating slurry containing a first positive electrode lithium supplementing agent, a conductive agent, a binder, and a solvent. The positive electrode active material layer 22 may be formed by coating and baking positive electrode slurry containing a first positive electrode active material, a conductive agent, a binder, and a solvent. A coating manner may include but is not limited to one or a combination of a plurality of manners such as spin coating, brush coating, spray coating, dip coating, and blade coating. Similarly, the second lithium supplementing layer 23 may be formed by coating and baking second lithium supplementing slurry containing a second positive electrode lithium supplementing agent, a second positive electrode active material, a conductive agent, a binder, and a solvent. A type of the used second lithium supplementing slurry corresponds to a total quantity of sublayers of the second lithium supplementing layer 23.

The solvents contained in the slurry may be the same or different, and each may be selected from one or more of pyrrolidinone (for example, N-methyl pyrrolidone (NMP) or N-ethyl pyrrolidone), cyclic ether (for example, tetrahydrofuran or methyl tetrahydrofuran), dimethyl sulfoxide, ketone (for example, acetone or butanone), lactone (for example, butyrolactone or caprolactone), and the like, but are not limited thereto. Solid content of each slurry is not particularly limited, provided that fluidity and uniformity of slurry coating can be satisfied. Generally, solid content of the primer coating slurry may be 10% to 50%. Solid content of the positive electrode slurry is within a range of 30% to 70%.

Further, the slurry may be coated simultaneously or sequentially in a laminated manner, or may be coated on a coating formed by drying previous slurry. For example, when the second lithium supplementing layer 23 is one layer, second lithium supplementing slurry may be directly coated on positive electrode slurry (which may be coated simultaneously or sequentially), then drying is performed together to remove a solvent, and then roll-in is performed. If double-sided coating is needed, the foregoing operation may be repeated on a surface on the other side of the positive electrode current collector 10. Alternatively, the primer coating slurry may be coated on a surface on one side of the positive electrode current collector 10 and dried to form the first lithium supplementing layer 21. Then, the positive electrode slurry is coated on the first lithium supplementing layer 21 and dried to form the positive electrode active material layer 22. Subsequently, the second lithium supplementing slurry is coated on the positive electrode active material layer 22 and dried to form the second lithium supplementing layer 23, and then roll-in is performed.

An embodiment of the present disclosure further provides a lithium battery. The lithium battery includes the positive electrode sheet 100 described in embodiments of the present disclosure.

In some implementations of the present disclosure, the lithium battery includes a positive electrode sheet, a negative electrode sheet, and a separator and an electrolyte arranged between the negative electrode sheet and the positive electrode sheet.

The negative electrode sheet usually includes a negative electrode current collector and a negative electrode material layer arranged on a surface on at least one side of the negative electrode current collector. The negative electrode material layer usually contains a negative electrode active material, a conductive agent, and a binder. In an implementation of the present disclosure, the negative electrode active material may be selected from one or more of a carbon material, a silicon-based material, a tin-based material, and the like. The carbon material includes one or more of soft carbon, hard carbon, graphite, mesocarbon microbeads, and the like. The silicon-based material may include one or more of elemental silicon, a silicon alloy, a silicon oxide, a silicon-carbon composite material, and the like. The tin-based material may include one or more of elemental tin, a tin oxide, a tin-based alloy, a tin-carbon compound, and the like.

The separator is used to separate the positive electrode sheet and the negative electrode sheet to maintain insulation and liquid retention characteristics between the positive electrode sheet and the negative electrode sheet. The separator, the positive electrode sheet, and the negative electrode sheet jointly form a cell of the battery, and the cell is accommodated in a battery housing and is soaked by an electrolyte in the housing. In some implementations of the present disclosure, the lithium battery may be assembled by using the following method: The positive electrode sheet, the separator, and the negative electrode sheet are sequentially laminated to obtain the cell; and the cell is accommodated in the battery housing, the electrolyte is injected, and then the battery housing is sealed to obtain the battery. The cell may be of a winding type or a laminated type.

The separator may use any separator material in the battery. For example, the separator may include but is not limited to a polymer separator such as a single-layer PP (polypropylene) membrane, a single-layer PE (polyethylene) membrane, a double-layer PP/PE membrane, a double-layer PP/PP membrane, and a three-layer PP/PE/PP membrane, or a non-woven fabric. The electrolyte includes an electrolyte salt and an organic solvent. Specific types and compositions of the electrolyte salt and the organic solvent are conventional selections in the battery field, and may be selected according to actual requirements.

An embodiment of the present disclosure further provides an apparatus. The apparatus includes the foregoing lithium battery in embodiments of the present disclosure. The apparatus may be a power-consuming device such as an electric vehicle (for example, a car, a motorcycle, or a bicycle), an electric toy, or a 3C product (for example, a mobile phone, a notebook computer, a tablet computer, a stylus-input computer, an e-book player, or a wearable device); or may be an energy storage system or the like. The energy storage system may include a plurality of lithium batteries described above and a battery management system. The energy storage system may also supply power to a power-consuming device. The power-consuming device powered by the foregoing lithium battery has a long running time and a high charging speed.

The following further describes the technical solutions of the present disclosure with reference to a plurality of specific examples.

### Example 1

A method for preparing a positive electrode sheet includes the following processing.

A first positive electrode lithium supplementing agent (for example, Li₅FeO₄ with a carbon coating layer on a surface, where a mass proportion of a material of the coating layer is 3 wt%) was mixed with a positive electrode active material lithium iron phosphate (LFP), a binder PVDF, a conductive agent carbon black, a dispersant PVP, and a solvent NMP in a mass ratio of 100:50:4.5:4.5:2:240, stirring was performed evenly to obtain primer coating slurry, the primer coating slurry was sprayed on a surface of a positive electrode current collector aluminum foil, and then the NMP was volatilized through baking at a high temperature, to form aluminum foil with a first lithium supplementing layer. A single-sided areal density of the first lithium supplementing layer is 5.8 g/m², and a single-sided thickness of the first lithium supplementing layer is 4±1 µm.

Lithium iron phosphate (LFP) was evenly mixed with a binder PVDF, a carbon nanotube conductive agent, a graphene conductive agent, and a solvent NMP in a mass ratio of 100:2.5:1:0.5:60, to obtain positive electrode slurry; and the positive electrode slurry was coated on the first lithium supplementing layer, to form a positive electrode active material layer with a single-sided areal density of 100 g/m² and a single-sided thickness of 40 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:2:60, to obtain mixed slurry, and the mixed slurry was coated on the positive electrode active material layer, to obtain a second lithium supplementing layer with a single-sided areal density of 100 g/m² and a single-sided thickness of 40 µm through baking. If double-sided coating is needed, the foregoing operations of forming the first lithium supplementing layer, the positive electrode active material layer, and the second lithium supplementing layer are repeated on the other side of the aluminum foil, to obtain a double-sided positive electrode sheet.

Preparation of a lithium battery is as follows:
(1) Negative electrode sheet preparation: A negative electrode active material graphite, a binder SBR, a thickener CMC, a conductive agent carbon black, and a solvent H₂O were evenly mixed in a mass ratio of 100:2:2:1:120, to obtain negative electrode slurry. The negative electrode slurry was coated on a negative electrode current collector copper foil, to form a negative electrode active material layer with a single-sided areal density of 100 g/m² through baking.
(2) Battery assembly: The positive electrode sheet, a separator, and the negative electrode sheet were sequentially laminated to obtain a cell. Then, the laminated cell was wound and placed in a battery housing, a prepared electrolyte was injected after assembly and baking, the battery housing was sealed, and an air bag was reserved, to prepare a fully wrapped lithium battery for a subsequent electrical performance test.

### Example 2

Preparation of a positive electrode sheet differs from that in Example 1 in the following: A second lithium supplementing layer includes two sublayers whose areal densities are the same, a single-sided areal density of the second lithium supplementing layer is still the same as that in Example 1 and is 100 g/m², and a thickness is 40 µm. A formula of lower layer slurry coated close to a positive electrode active material layer is LFP : PVDF : carbon nanotube : graphene : Li₂C₂O₄ : NMP=100:2.6:1:0.5:1.0:60. A formula of upper layer slurry coated away from the positive electrode active material layer is LFP : PVDF : carbon nanotube : graphene : Li₂C₂O₄ : NMP=100:2.4:1:0.5:3.0:60.

According to the method recorded in Example 1, the positive electrode sheet in Example 2 was assembled into a fully wrapped lithium battery.

### Example 3

Preparation of a positive electrode sheet mainly differs from that in Example 1 in the following: A first lithium supplementing layer does not contain a positive electrode active material LFP. Correspondingly, a formula of slurry for forming the first lithium supplementing layer is that a mixing mass ratio of Li₅FeO₄ to a binder PVDF to carbon black to a dispersant PVP to a solvent NMP is 100:4.5:4.5:2:240. A single-sided areal density of the first lithium supplementing layer is 4.0 g/m², and a single-sided thickness of the first lithium supplementing layer is 3±1 µm.

According to the method recorded in Example 1, the positive electrode sheet in Example 3 was assembled into a fully wrapped lithium battery.

### Example 4

Preparation of a positive electrode sheet mainly differs from that in Example 1 in the following: A first positive electrode lithium supplementing agent in a first lithium supplementing layer is replaced with Li₆CoO₄ with a carbon coating layer on a surface (where a mass proportion of a material of the coating layer is 2.5 wt%), and a positive electrode active material is replaced from LFP with lithium manganese iron phosphate (LMFP, with a structural formula of LiMn_{0.6}Fe_{0.4}PO₄). A single-sided areal density of the first lithium supplementing layer is 5.0 g/m², and a single-sided thickness of the first lithium supplementing layer is 4±1 µm.

According to the method recorded in Example 1, the positive electrode sheet in Example 4 was assembled into a fully wrapped lithium battery.

### Example 5

Preparation of a positive electrode sheet mainly differs from that in Example 2 in the following: A first positive electrode lithium supplementing agent in a first lithium supplementing layer is replaced with Li₆MnO₄ with a carbon coating layer on a surface (where a mass proportion of a material of the coating layer is 3 wt%), and a second positive electrode lithium supplementing agent in a second lithium supplementing layer is replaced with lithium nitride (Li₃N).

Specifically, a formula of primer coating slurry for forming the first lithium supplementing layer is the same as that in Example 1, except that a single-sided areal density of the first lithium supplementing layer is 4.8 g/m² and a single-sided thickness of the first lithium supplementing layer is 4±1 µm.

Composition and an areal density of a positive electrode active material layer are the same as those in Examples 1 and 3.

A second lithium supplementing layer includes an upper layer and a lower layer whose areal densities are the same, a single-sided areal density of the second lithium supplementing layer is 64 g/m², and a single-sided thickness is 26 µm. A formula of lower layer slurry coated close to a positive electrode active material layer is LFP : PVDF : carbon nanotube : graphene : Li₃N : NMP=100:2.6:1:0.5:0.6:60. A formula of upper layer slurry coated away from the positive electrode active material layer is LFP : PVDF : carbon nanotube : graphene : Li₃N : NMP=100:2.4:1:0.5:1.0:60.

According to the method recorded in Example 1, the positive electrode sheet in Example 5 was assembled into a fully wrapped lithium battery.

### Example 6

Preparation of a positive electrode sheet mainly differs from that in Example 1 in the following:
(1) Primer coating slurry for forming a first lithium supplementing layer was obtained by mixing a first positive electrode lithium supplementing agent (Li₂NiO₂ without a coating layer on a surface) with LFP, a binder PVDF, a conductive agent carbon black, a dispersant PVP, and a solvent NMP in a mass ratio of 100:30:4.5:4.5:2:240. A single-sided areal density of the first lithium supplementing layer is 8.4 g/m², and a coating thickness is 6±1 µm.
(2) A second lithium supplementing layer includes an upper sublayer and a lower sublayer. A formula of slurry corresponding to the lower lithium supplementing sublayer arranged close to a positive electrode active material layer is LFP : PVDF : carbon nanotube : graphene : Li₂CO₃ : NMP=100:2.6:1:0.5:1:60, a formula of slurry corresponding to the upper lithium supplementing sublayer arranged away from the positive electrode active material layer is LFP : PVDF : carbon nanotube : graphene : Li₂CO₃ : NMP=100:2.4:1:0.5:2:60, a ratio of single-sided areal densities of the upper and lower second lithium supplementing sublayers is 6:4, and a sum of the two single-sided areal densities is 100 g/m². In the second lithium supplementing layer in Example 6, a total mass of the second lithium supplementing agent Li₂CO₃ is 1.4% of a total mass of the LFP.

According to the method recorded in Example 1, the positive electrode sheet in Example 6 was assembled into a fully wrapped lithium battery.

### Example 7

Preparation of a positive electrode sheet mainly differs from that in Example 6 in the following: A second lithium supplementing layer is one layer, and mixed slurry for forming the second lithium supplementing layer was obtained by mixing LFP, a binder PVDF, a carbon nanotube conductive agent, a graphene conductive agent, a second lithium supplementing agent Li₂CO₃, and NMP in a mass ratio of 100:2.5:1:0.5:1.4:60. A single-sided areal density and a thickness of the second lithium supplementing layer are the same as those in Example 6. A single-sided areal density and a thickness of the second lithium supplementing layer are the same as those in Example 6.

According to the method recorded in Example 1, the positive electrode sheet in Example 7 was assembled into a fully wrapped lithium battery.

### Example 8

A positive electrode sheet differs from that in Example 1 in the following: A first positive electrode lithium supplementing agent used is Li₅FeO₄ without a conductive coating layer on a surface.

### Example 9

A method for preparing a positive electrode sheet includes the following:
A first positive electrode lithium supplementing agent (which is specifically Li₅FeO₄ with a carbon coating layer on a surface, where a mass proportion of a material of the coating layer is 3 wt%) was mixed with a positive electrode active material lithium iron phosphate (LFP), a binder PVDF, a conductive agent carbon black, a dispersant PVP, and a solvent NMP in a mass ratio of 61:50:4.5:4.5:2:120, to form primer coating slurry, and the primer coating slurry was sprayed on a surface of a positive electrode current collector aluminum foil, to form a first lithium supplementing layer with a single-sided areal density of 20 g/m² and a single-sided thickness of 16±1 µm through baking.

Positive electrode slurry having the same formula as that in Example 1 was coated on the first lithium supplementing layer, to form a positive electrode active material layer with a single-sided areal density of 150 g/m² and a single-sided thickness of 60 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:1:60, to obtain mixed slurry, and the mixed slurry was coated on the positive electrode active material layer, to obtain a second lithium supplementing layer with a single-sided areal density of 30 g/m² and a single-sided thickness of 12 µm through baking. The single-sided areal density of the first lithium supplementing layer is 10% of a sum of single-sided areal densities of the first lithium supplementing layer, the positive electrode active material layer, and the second lithium supplementing layer.

The foregoing operations of forming the first lithium supplementing layer, the positive electrode active material layer, and the second lithium supplementing layer are repeated on the other side of the aluminum foil, to obtain a double-sided positive electrode sheet.

According to the method recorded in Example 1, the positive electrode sheet in Example 9 was assembled into a fully wrapped lithium battery.

### Example 10

A method for preparing a positive electrode sheet includes the following:
A first positive electrode lithium supplementing agent (which is specifically Li₅FeO₄ with a carbon coating layer on a surface, where a mass proportion of a material of the coating layer is 3 wt%) was mixed with a positive electrode active material lithium iron phosphate (LFP), a binder PVDF, a conductive agent carbon black, a dispersant PVP, and a solvent NMP in a mass ratio of 61:50:4.5:4.5:2:120, to form primer coating slurry, and the primer coating slurry was sprayed on a surface of a positive electrode current collector aluminum foil, to form a first lithium supplementing layer with an areal density of 50 g/m² and a thickness of 40±1 µm through baking.

Positive electrode slurry having the same formula as that in Example 1 was coated on the first lithium supplementing layer, to form a positive electrode active material layer with a single-sided areal density of 375 g/m² and a single-sided thickness of 150 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:1:60, to obtain mixed slurry, and the mixed slurry was coated on the positive electrode active material layer, to obtain a second lithium supplementing layer with a single-sided areal density of 75 g/m² and a single-sided thickness of 30 µm through baking.

The foregoing operations of forming the first lithium supplementing layer, the positive electrode active material layer, and the second lithium supplementing layer are repeated on the other side of the aluminum foil, to obtain a double-sided positive electrode sheet.

### Example 11

A positive electrode sheet mainly differs from that in Example 1 in the following: A single-sided areal density of a first lithium supplementing layer is 0.2 of a sum of single-sided areal densities of the first lithium supplementing layer, a positive electrode active material layer, and a second lithium supplementing layer, and a single-sided areal density of the second lithium supplementing layer is 0.1 times the sum of the single-sided areal densities of the first lithium supplementing layer, the positive electrode active material layer, and the second lithium supplementing layer.

A method for preparing the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 61:50:4.5:4.5:2:100 was sprayed on a surface of a positive electrode current collector aluminum foil, to form a first lithium supplementing layer through baking. A single-sided areal density of the first lithium supplementing layer is 40.0 g/m², and a single-sided thickness of the first lithium supplementing layer is 16 µm.

Positive electrode slurry having the same formula as that in Example 1 was coated on the first lithium supplementing layer, to form a positive electrode active material layer with a single-sided areal density of 140 g/m² and a single-sided thickness of 56 µm through baking.

Then, mixed slurry having the same formula as that in Example 1 was coated on the positive electrode active material layer, to form a second lithium supplementing layer with a single-sided areal density of 20 g/m² and a single-sided thickness of 8 µm through baking.

According to the method recorded in Example 1, the positive electrode sheet in Example 11 was assembled into a fully wrapped lithium battery.

### Example 12

A positive electrode sheet differs from that in Example 1 in the following: A first lithium supplementing layer has a single-sided areal density of 0.5 g/m² and a single-sided thickness of 2±1 µm; a positive electrode active material layer has a single-sided areal density of 30 g/m² and a single-sided thickness of 12 µm; a second lithium supplementing layer has a single-sided areal density of 150 g/m² and a single-sided thickness of 60 µm; and in slurry for forming the second lithium supplementing layer, a mass of a second lithium supplementing agent lithium oxalate is 4% of a mass of LFP. The single-sided areal density of the first lithium supplementing layer is 0.003 of a sum of single-sided areal densities of the first lithium supplementing layer, the positive electrode active material layer, and the second lithium supplementing layer.

A method for preparing the positive electrode sheet includes the following: Primer coating slurry having the same formula as that in Example 1 was sprayed on a surface of a positive electrode current collector aluminum foil, to form a first lithium supplementing layer through baking. A single-sided areal density of the first lithium supplementing layer is 0.5 g/m², and a single-sided thickness of the first lithium supplementing layer is 1 µm.

Positive electrode slurry having the same formula as that in Example 1 was coated on the first lithium supplementing layer, to form a positive electrode active material layer with a single-sided areal density of 30 g/m² and a single-sided thickness of 12 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:3.7:60, to obtain mixed slurry, and the mixed slurry was coated on the positive electrode active material layer, to obtain a second lithium supplementing layer with a single-sided areal density of 170 g/m² and a single-sided thickness of 68 µm through baking.

According to the method recorded in Example 1, the positive electrode sheet in Example 12 was assembled into a fully wrapped lithium battery.

### Example 13

A positive electrode sheet mainly differs from that in Example 1 in the following: A first lithium supplementing layer has a single-sided areal density of 2.0 g/m² and a single-sided thickness of 1 µm; a positive electrode active material layer has a single-sided areal density of 18 g/m² and a single-sided thickness of 8 µm; a second lithium supplementing layer has a single-sided areal density of 180 g/m² and a single-sided thickness of 72 µm; and in slurry for forming the second lithium supplementing layer, a mass of a second lithium supplementing agent lithium oxalate is 1.1% of a mass of LFP. The single-sided areal density of the first lithium supplementing layer is 0.01 of a sum of single-sided areal densities of the first lithium supplementing layer, the positive electrode active material layer, and the second lithium supplementing layer, and the single-sided areal density of the second lithium supplementing layer is 0.9 times the sum of the single-sided areal densities of the first lithium supplementing layer, the positive electrode active material layer, and the second lithium supplementing layer.

A method for preparing the positive electrode sheet includes the following:
Primer coating slurry having the same formula as that in Example 1 was sprayed on a surface of a positive electrode current collector aluminum foil, to form aluminum foil with a first lithium supplementing layer through baking. A single-sided areal density of the first lithium supplementing layer is 2.0 g/m², and a single-sided thickness of the first lithium supplementing layer is 1 µm.

Positive electrode slurry having the same formula as that in Example 1 was coated on the first lithium supplementing layer, to form a positive electrode active material layer with a single-sided areal density of 18 g/m² and a single-sided thickness of 8 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:2.8:60, to obtain mixed slurry, and the mixed slurry was coated on the positive electrode active material layer, to obtain a second lithium supplementing layer with a single-sided areal density of 180 g/m² and a single-sided thickness of 72 µm through baking.

According to the method recorded in Example 1, the positive electrode sheet in Example 13 was assembled into a fully wrapped lithium battery.

### Example 14

A positive electrode sheet mainly differs from that in Example 1 in the following: A positive electrode active material layer has a single-sided areal density of 66 g/m² and a single-sided thickness of 26 µm, a second lithium supplementing layer has a single-sided areal density of 132 g/m² and a single-sided thickness of 52 µm, and a ratio of the single-sided areal densities of the positive electrode active material layer and the second lithium supplementing layer is 0.5. In addition, in slurry for forming the second lithium supplementing layer, a mass of lithium oxalate is 1.5% of a mass of LFP.

A method for preparing the positive electrode sheet includes the following: Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer with an areal density of 5.8 g/m² and a thickness of 4 µm through baking.

Positive electrode slurry having the same formula as that in Example 1 was coated on the first lithium supplementing layer, to form a positive electrode active material layer with a single-sided areal density of 66 g/m² and a single-sided thickness of 26 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:1.5:60, to obtain mixed slurry, and the mixed slurry was coated on the positive electrode active material layer, to obtain a second lithium supplementing layer with a single-sided areal density of 132 g/m² and a single-sided thickness of 52 µm through baking.

According to the method recorded in Example 1, the positive electrode sheet in Example 14 was assembled into a fully wrapped lithium battery.

### Example 15

A positive electrode sheet mainly differs from that in Example 1 in the following: A ratio of single-sided areal densities of a positive electrode active material layer and a second lithium supplementing layer is 2.0, the positive electrode active material layer has a single-sided areal density of 132 g/m² and a single-sided thickness of 52 µm, the second lithium supplementing layer has a single-sided areal density of 66 g/m² and a single-sided thickness of 26 µm, and in slurry for forming the second lithium supplementing layer, a mass of lithium oxalate is 3% of a mass of LFP.

A method for preparing the positive electrode sheet includes the following: Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 5.8 g/m², and a single-sided thickness of the first lithium supplementing layer is 4 µm.

Positive electrode slurry having the same formula as that in Example 1 was coated on the first lithium supplementing layer, to form a positive electrode active material layer with a single-sided areal density of 132 g/m² and a single-sided thickness of 52 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:3:60, to obtain mixed slurry, and the mixed slurry was coated on the positive electrode active material layer, to obtain a second lithium supplementing layer with a single-sided areal density of 66 g/m² and a single-sided thickness of 26 µm through baking.

According to the method recorded in Example 1, the positive electrode sheet in Example 15 was assembled into a fully wrapped lithium battery.

### Example 16

A positive electrode sheet mainly differs from that in Example 1 in the following: A positive electrode active material layer has a single-sided areal density of 34 g/m² and a single-sided thickness of 14 µm; a second lithium supplementing layer has a single-sided areal density of 166 g/m² and a single-sided thickness of 66 µm; and in slurry for forming the second lithium supplementing layer, a mass of lithium oxalate is 1.2% of a mass of LFP. A ratio of the single-sided areal densities of the positive electrode active material layer and the second lithium supplementing layer is 0.2.

A method for preparing the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 5.8 g/m², and a single-sided thickness of the first lithium supplementing layer is 4 µm.

Positive electrode slurry having the same formula as that in Example 1 was coated on the first lithium supplementing layer, to form a positive electrode active material layer with a single-sided areal density of 34 g/m² and a single-sided thickness of 14 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:1.2:60, to obtain mixed slurry, and the mixed slurry was coated on the positive electrode active material layer, to obtain a second lithium supplementing layer with a single-sided areal density of 166 g/m² and a single-sided thickness of 66 µm through baking.

According to the method recorded in Example 1, the positive electrode sheet in Example 16 was assembled into a fully wrapped lithium battery.

### Example 17

A main difference between Example 17 and Example 1 lies in the following: A positive electrode active material layer has a single-sided areal density of 20 g/m² and a single-sided thickness of 8 µm; a second lithium supplementing layer has a single-sided areal density of 180 g/m² and a single-sided thickness of 72 µm; and in the second lithium supplementing layer of a positive electrode sheet in Example 17, a total mass of a second lithium supplementing agent is 1.1% of a total mass of LFP.

Preparation of the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 5.8 g/m², and a single-sided thickness of the first lithium supplementing layer is 4 µm.

Positive electrode slurry having the same formula as that in Example 1 was coated on the first lithium supplementing layer, to form a positive electrode active material layer with a single-sided areal density of 20 g/m² and a single-sided thickness of 8 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:1.1:60, to obtain mixed slurry, and the mixed slurry was coated on the positive electrode active material layer, to obtain a second lithium supplementing layer with a single-sided areal density of 180 g/m² and a single-sided thickness of 72 µm through baking.

According to the method recorded in Example 1, the positive electrode sheet in Example 17 was assembled into a fully wrapped lithium battery.

### Example 18

A main difference between Example 18 and Example 1 lies in the following: In a positive electrode sheet in Example 18, a positive electrode active material layer has a single-sided areal density of 159 g/m² and a single-sided thickness of 64 µm; a second lithium supplementing layer has a single-sided areal density of 41 g/m² and a single-sided thickness of 16 µm; and in the second lithium supplementing layer, a total mass of a second lithium supplementing agent is 5% of a total mass of LFP. The single-sided areal density of the second lithium supplementing layer is 0.2 times a sum of single-sided areal densities of a first lithium supplementing layer, the positive electrode active material layer, and the second lithium supplementing layer.

Preparation of the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 5.8 g/m², and a single-sided thickness of the first lithium supplementing layer is 4 µm.

Positive electrode slurry having the same formula as that in Example 1 was coated on the first lithium supplementing layer, to form a positive electrode active material layer with a single-sided areal density of 159 g/m² and a single-sided thickness of 64 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:5:60, to obtain mixed slurry, and the mixed slurry was coated on the positive electrode active material layer, to obtain a second lithium supplementing layer with a single-sided areal density of 41 g/m² and a single-sided thickness of 16 µm through baking.

According to the method recorded in Example 1, the positive electrode sheet in Example 18 was assembled into a fully wrapped lithium battery.

### Example 19

A main difference between Example 19 and Example 1 lies in the following: In a positive electrode sheet in Example 19, a positive electrode active material layer has a single-sided areal density of 178 g/m² and a single-sided thickness of 71 µm; a second lithium supplementing layer has a single-sided areal density of 22 g/m² and a single-sided thickness of 9 µm; and in the second lithium supplementing layer, a total mass of a second lithium supplementing agent is 10% of a total mass of LFP. The single-sided areal density of the second lithium supplementing layer is 0.11 times a sum of single-sided areal densities of a first lithium supplementing layer, the positive electrode active material layer, and the second lithium supplementing layer.

Preparation of the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 5.8 g/m², and a single-sided thickness of the first lithium supplementing layer is 4 µm.

Positive electrode slurry having the same formula as that in Example 1 was coated on the first lithium supplementing layer, to form a positive electrode active material layer with a single-sided areal density of 178 g/m² and a single-sided thickness of 71 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:10:60, to obtain mixed slurry, and the mixed slurry was coated on the positive electrode active material layer, to obtain a second lithium supplementing layer with a single-sided areal density of 22 g/m² and a single-sided thickness of 9 µm through baking.

According to the method recorded in Example 1, the positive electrode sheet in Example 19 was assembled into a fully wrapped lithium battery.

### Example 20

A main difference between Example 20 and Example 1 lies in the following: In a positive electrode sheet in Example 20, a total mass of a second lithium supplementing agent is 0.5% of a total mass of LFP in a second lithium supplementing layer; and a first lithium supplementing layer has a single-sided areal density of 9.5 g/m² and a single-sided thickness of 7 µm.

Preparation of the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 9.5 g/m², and a single-sided thickness of the first lithium supplementing layer is 7 µm.

Positive electrode slurry having the same formula as that in Example 1 was coated on the first lithium supplementing layer, to form a positive electrode active material layer with a single-sided areal density of 100 g/m² and a single-sided thickness of 40 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:0.5:60, to obtain mixed slurry, and the mixed slurry was coated on the positive electrode active material layer, to obtain a second lithium supplementing layer with a single-sided areal density of 100 g/m² and a single-sided thickness of 40 µm through baking.

According to the method recorded in Example 1, the positive electrode sheet in Example 20 was assembled into a fully wrapped lithium battery.

### Example 21

A main difference between Example 21 and Example 1 lies in the following: In a positive electrode sheet in Example 21, a total mass of a second lithium supplementing agent is 0.2% of a total mass of a positive electrode active material in a second lithium supplementing layer; and a first lithium supplementing layer has a single-sided areal density of 10.0 g/m² and a thickness of 8 µm.

Preparation of the positive electrode sheet includes the following:
Primer coating slurry formed by mixing a first positive electrode lithium supplementing agent (which is specifically Li₅FeO₄ with a carbon coating layer on a surface, where a mass proportion of a material of the coating layer is 3 wt%) with a positive electrode active material lithium iron phosphate (LFP), a binder PVDF, a conductive agent carbon black, a dispersant PVP, and a solvent NMP in a mass ratio of 100:50:4.5:4.5:2:100 was sprayed on a surface of a positive electrode current collector aluminum foil, to form a first lithium supplementing layer through baking. A single-sided areal density of the first lithium supplementing layer is 10.0 g/m², and a thickness of the first lithium supplementing layer is 8 µm.

Positive electrode slurry having the same formula as that in Example 1 was coated on the first lithium supplementing layer, to form a positive electrode active material layer with a single-sided areal density of 100 g/m² and a single-sided thickness of 40 µm through baking.

Then, LFP was evenly mixed with a binder PVDF, a carbon nanotube conductive agent, a graphene conductive agent, a second positive electrode lithium supplementing agent lithium oxalate (Li₂C₂O₄), and a solvent NMP in a mass ratio of 100:2.5:1:0.5:0.2:60, to obtain mixed slurry, and the mixed slurry was coated on the positive electrode active material layer, to obtain a second lithium supplementing layer with a single-sided areal density of 100 g/m² and a single-sided thickness of 40 µm through baking.

According to the method recorded in Example 1, the positive electrode sheet in Example 21 was assembled into a fully wrapped lithium battery.

To highlight the beneficial effects of the present disclosure, the present disclosure further provides the following Comparative Examples 1 to 4.

### Comparative Example 1

Preparation of a non-lithium-supplementing positive electrode sheet includes the following: Lithium iron phosphate LFP, a binder PVDF, a carbon nanotube, graphene, and a solvent NMP were evenly mixed in a mass ratio of 100:2.5:1:0.5:60, to obtain positive electrode slurry. The positive electrode slurry was coated on an aluminum foil current collector, to form a positive electrode coating with a single-sided areal density of 200 g/m² through drying. Then, the positive electrode slurry was coated on the other side of the aluminum foil and dried to obtain a double-sided positive electrode sheet.

According to the method recorded in Example 1, the positive electrode sheet in Comparative Example 1 was assembled into a fully wrapped lithium battery.

### Comparative Example 2

A positive electrode sheet differs from that in Example 1 in the following: Only a mixed layer containing both LFP and a first positive electrode lithium supplementing agent was provided on aluminum foil.

Preparation of the positive electrode sheet includes the following: LFP, a binder PVDF, a carbon nanotube conductive agent, a graphene conductive agent, a first positive electrode lithium supplementing agent (which is the same as that in Example 1, and is Li₅FeO₄ with a conductive carbon coating layer on a surface), and a solvent NMP were evenly mixed in a mass ratio of 100:2.5:1:0.5:2:60, to obtain mixed slurry. The mixed slurry was coated on an aluminum foil current collector, to form a positive electrode coating with a single-sided areal density of 200 g/m² through drying.

According to the method recorded in Example 1, the positive electrode sheet in Comparative Example 2 was assembled into a fully wrapped lithium battery.

### Comparative Example 3

A positive electrode sheet differs from that in Example 1 in the following: Only a mixed layer containing both LFP and a second positive electrode lithium supplementing agent was provided on aluminum foil.

Preparation of the positive electrode sheet includes the following: LFP, a binder PVDF, a carbon nanotube, graphene, a second positive electrode lithium supplementing agent Li₂C₂O₄, and a solvent NMP were evenly mixed in a mass ratio of 100:2.5:1:0.5:2:60, to obtain positive electrode slurry. The positive electrode slurry was coated on an aluminum foil current collector, to form a positive electrode mixed layer with a single-sided areal density of 200 g/m² through drying.

According to the method recorded in Example 1, the positive electrode sheet in Comparative Example 3 was assembled into a fully wrapped lithium battery.

### Comparative Example 4

A positive electrode sheet mainly differs from that in Example 1 in the following: A mixed layer containing a first positive electrode lithium supplementing agent, a second positive electrode lithium supplementing agent, and a positive electrode active material was directly provided on aluminum foil.

LFP, a binder PVDF, a carbon nanotube, graphene, a first positive electrode lithium supplementing agent, a second positive electrode lithium supplementing agent Li₂C₂O₄, and a solvent NMP were evenly mixed in a mass ratio of 100:2.5:1:0.5:1:1:60, to obtain positive electrode slurry. The positive electrode slurry was directly coated on aluminum foil, to form a positive electrode coating with a single-sided areal density of 200 g/m² through baking. Then, the positive electrode coating slurry was coated on the other side of the aluminum foil and baked to obtain a double-sided positive electrode sheet.

According to the method recorded in Example 1, the positive electrode sheet in Comparative Example 4 was assembled into a fully wrapped sodium battery.

### Comparative Example 5

A positive electrode sheet differs from that in Example 1 in the following: There is no second lithium supplementing layer above a positive electrode active material layer, and a single-sided areal density of the positive electrode active material layer is equal to a sum of the single-sided areal densities of the positive electrode active material layer and the second lithium supplementing layer in Example 1.

Preparation of the positive electrode sheet includes the following: (1) A first positive electrode lithium supplementing agent (which is specifically Li₅FeO₄ with a carbon coating layer on a surface, where a mass proportion of a material of the coating layer is 3 wt%) was mixed with a positive electrode active material lithium iron phosphate (LFP), a binder PVDF, a conductive agent carbon black, a dispersant PVP, and a solvent NMP in a mass ratio of 100:50:4.5:4.5:2:240, stirring was performed evenly to obtain primer coating slurry, the primer coating slurry was sprayed on a surface of a positive electrode current collector aluminum foil, and then the NMP was volatilized through baking at a high temperature, to form aluminum foil with a first lithium supplementing layer. A single-sided areal density of the first lithium supplementing layer is 11.6 g/m², and a single-sided thickness of the first lithium supplementing layer is 8±1 µm. (2) LFP, a binder PVDF, a carbon nanotube conductive agent, a graphene conductive agent, and a solvent NMP were evenly mixed in a mass ratio of 100:2.5:1:0.5:60, to obtain positive electrode slurry; and the positive electrode slurry was coated on the first lithium supplementing layer, to form a positive electrode active material layer with a single-sided areal density of 200 g/m² through drying.

According to the method recorded in Example 1, the positive electrode sheet in Comparative Example 5 was assembled into a fully wrapped lithium battery.

### Comparative Example 6

A positive electrode sheet mainly differs from that in Example 1 in the following: Positions of the second lithium supplementing layer and the first lithium supplementing layer in Example 1 were reversed, and there was no separate positive electrode active material layer.

A method for preparing the positive electrode sheet includes the following:
LFP, a binder PVDF, a carbon nanotube, graphene, a second positive electrode lithium supplementing agent Li₂C₂O₄, and a solvent NMP were evenly mixed in a mass ratio of 100:2.5:1:0.5:2:60, to obtain first positive electrode slurry. The first positive electrode slurry was coated on an aluminum foil current collector, to form a first material layer with a single-sided areal density of 200 g/m² through drying.

A first positive electrode lithium supplementing agent (the same as that in Example 1) was mixed with LFP, a binder PVDF, a conductive agent carbon black, a dispersant PVP, and a solvent NMP in a mass ratio of 100:50:4.5:4.5:2:240, to obtain second slurry; and the second slurry was coated on the first material layer, to form a second material layer with a single-sided areal density of 5.8 g/m² through drying.

### Comparative Example 7

Preparation of a positive electrode differs from that in Comparative Example 1 in the following: A positive electrode active material is replaced from lithium iron phosphate with lithium manganese iron phosphate.

A method for preparing the positive electrode includes the following: Lithium manganese iron phosphate, a binder PVDF, a carbon nanotube conductive agent, a graphene conductive agent, and a solvent NMP were evenly mixed in a mass ratio of 100:2.5:1:0.5:60, to obtain positive electrode slurry. The positive electrode slurry was coated on an aluminum foil current collector, to form a positive electrode material layer with a single-sided areal density of 200 g/m² through drying. The foregoing operation of forming the positive electrode material layer was repeated on the other side of the aluminum foil, and then roll-in was performed to obtain the positive electrode.

According to the method recorded in Example 1, the positive electrode in Comparative Example 7 was assembled into a fully wrapped lithium battery.

To strongly support the beneficial effects brought by the technical solutions of the present disclosure, the following performance tests were separately performed on the fully wrapped lithium batteries in the foregoing Examples or Comparative Examples:
a. Positive electrode gram capacity test: The batteries were charged to an upper limit voltage of 4.6 V at a constant current of 1/3 C (C is a battery capacity) and a constant voltage at a normal temperature (25±3°C) to perform formation, and a first charge capacity (that is, a charge capacity during formation) was recorded. After aging (an aging procedure is storage at 45°C for 48 h in a state of 100% SOC), the batteries were discharged to a lower limit voltage of 2.0 V at 1/3 C for the first time, and a first discharge capacity and an average discharge voltage were calculated. In this case, a positive electrode gram capacity = the first discharge capacity/a total mass of a positive electrode active material; and a mass energy density of the battery = the first discharge capacity × the average discharge voltage/a mass of the battery.
b. Cycle performance test: The aged batteries were charged to an upper limit voltage of 3.8 V at a constant current of 1/3 C and a constant voltage at a normal temperature (25±3°C), and then were discharged to a lower limit voltage of 2.0 V at 1/3 C. The foregoing charging and discharging steps were repeated 500 times, and a capacity retention ratio after 500 cycles was recorded. The capacity retention ratio after 500 cycles = a discharge capacity in the 500^{th} cycle/a discharge capacity of first discharging after aging.
c. Battery direct current internal resistance (DCIR) test: The aged batteries were charged to an upper limit voltage of 3.8 V at a constant current of 1/3 C at a normal temperature (25±3°C), and then were discharged to a lower limit voltage of 2.0 V at 1/3 C. After three cycles, the batteries were charged to 50% SOC at a constant current of 1/3 C at 25°C, and a battery voltage V₁ after 1 hour rest was recorded. Then, the batteries were discharged at 1.5 C for 30s, and a battery voltage V₂ after discharging ends was recorded, where DCIR=(V₁-V₂)/1.5 C.
d. Utilization test of a lithium supplementing material:

Manufacturing of a non-lithium-supplementing battery corresponding to each lithium supplementing battery in Examples and Comparative Examples of the present disclosure (Examples 1 to 21 and Comparative Examples 2 to 6 are for lithium supplementing batteries, and Comparative Examples 1 and 7 are for non-lithium-supplementing batteries): A manufacturing process of each non-lithium-supplementing battery is basically the same as that of a corresponding lithium supplementing battery. A difference is as follows: A lithium supplementing agent is not added to a positive electrode of the non-lithium-supplementing battery.

Then, the foregoing batteries were charged to an upper limit voltage of 4.6 V at a constant current of 1/3 C and a constant voltage at a normal temperature (25±3°C) to perform formation, and were discharged to a lower limit voltage of 2.0 V at 1/3 C after aging. A discharge capacity of each lithium supplementing battery is denoted as C₁, and a discharge capacity of a non-lithium-supplementing battery corresponding to each lithium supplementing battery is denoted as C₂. In this case, utilization of a lithium supplementing material = (C₁-C₂)/(a mass of the lithium supplementing material × a theoretical gram capacity of the lithium supplementing material).

Related test results were summarized in Table 1 below.

**Table 1**

| | Positive electrode gram capacity (mAh/g) | DCIR (mΩ) | Utilization of a lithium supplementing material (%) | Average discharge voltage (V) | Mass energy density (mWh/g) | Capacity retention ratio after 500 cycles (%) |
|---|---|---|---|---|---|---|
| Example 1 | 145.9 | 91 | 93 | 3.19 | 188 | 95.1 |
| Example 2 | 146.3 | 89 | 95.2 | 3.19 | 188 | 95.3 |
| Example 3 | 146.1 | 90 | 94.1 | 3.19 | 188 | 95.2 |
| Example 4 | 142 | 97 | 92.8 | 3.59 | 202 | 94.4 |
| Example 5 | 145.3 | 94 | 90.5 | 3.19 | 184 | 93.9 |
| Example 6 | 144.7 | 100 | 85.7 | 3.19 | 182 | 94.1 |
| Example 7 | 144.5 | 102 | 84.6 | 3.19 | 182 | 94 |
| Example 8 | 143.7 | 99 | 83.8 | 3.19 | 183 | 93 |
| Example 9 | 142.8 | 92 | 92.1 | 3.19 | 183 | 94.7 |
| Example 10 | 142.4 | 98 | 90.4 | 3.19 | 184 | 93.8 |
| Example 11 | 142.6 | 97 | 91.2 | 3.19 | 183 | 94.1 |
| Example 12 | 144.1 | 106 | 90.2 | 3.19 | 183 | 94 |
| Example 13 | 144.3 | 99 | 90.5 | 3.19 | 182 | 93.6 |
| Example 14 | 145.3 | 94 | 92.5 | 3.19 | 184 | 94.3 |
| Example 15 | 145.5 | 93 | 92.7 | 3.19 | 184 | 94.4 |
| Example 16 | 144.1 | 96 | 92 | 3.19 | 183 | 94 |
| Example 17 | 143.9 | 97 | 91.6 | 3.19 | 183 | 93.7 |
| Example 18 | 144.2 | 95 | 91.9 | 3.19 | 183 | 94.5 |
| Example 19 | 144.0 | 97 | 91.5 | 3.19 | 182 | 93.4 |
| Example 20 | 144.5 | 95 | 90.1 | 3.19 | 183 | 93.2 |
| Example 21 | 144.2 | 99 | 89.2 | 3.19 | 182 | 93.4 |
| Comparative Example 1 | 138.5 | 125 | / | 3.18 | 170 | 92.1 |
| Comparative Example 2 | 140.5 | 110 | 65 | 3.18 | 177 | 92.5 |
| Comparative Example 3 | 142.6 | 120 | 77.9 | 3.18 | 179 | 92.9 |
| Comparative Example 4 | 141.5 | 115 | 71.4 | 3.18 | 178 | 92.7 |
| Comparative Example 5 | 141.0 | 107 | 67.8 | 3.18 | 177 | 93.1 |
| Comparative Example 6 | 141.5 | 120 | 70.5 | 3.18 | 178 | 92.5 |
| Comparative Example 7 | 138.5 | 130 | / | 3.57 | 191 | 92.1 |

It can be learned through comparison between Example 1 and Comparative Examples 1 to 5 in Table 1 that, when a positive electrode of a battery does not contain a lithium supplementing material (Comparative Example 1), the battery has a low positive electrode gram capacity and a low mass energy density, and a high DCIR value. When a positive electrode contains only one type of positive electrode lithium supplementing agent (for example, Comparative Examples 2, 3, and 5), or when a positive electrode contains two types of positive electrode lithium supplementing agents but the positive electrode lithium supplementing agents are not distributed as in Example 1 of the present disclosure (Comparative Examples 4 and 6), although a positive electrode gram capacity and a volumetric energy density of the battery are improved compared with Comparative Example 1, DCIR value impedance of the battery is still high (which may reflect poor power performance of the battery), and utilization of a lithium supplementing material is low. In a case of a same positive electrode active material, in Example 1 of the present disclosure, when the foregoing first positive electrode lithium supplementing agent and second positive electrode lithium supplementing agent are both introduced into the positive electrode of the lithium battery, and are arranged in a manner required in the present disclosure, a positive electrode gram capacity and utilization of a lithium supplementing material are relatively high, a mass energy density of the battery is relatively high, impedance is relatively low, and an average discharge voltage is improved, so that a high-power discharge capability and a continuous discharge capability of the battery are improved, the cycle capacity retention ratio is also improved, and a battery life can be improved. A difference from Example 1 is only that Example 2 in which the second lithium supplementing layer has two layers also has a similar effect, and the effect is better than that of Example 1. In addition, through comparison between Comparative Example 7 and Example 4, a phenomenon similar to that between Example 1 and Comparative Example 1 can also be learned.

The foregoing embodiments describe only several implementations of the present disclosure, and the descriptions are relatively specific and detailed, but should not be construed as a limitation on the patent scope of the present disclosure. It should be noted that, a person of ordinary skill in the art may further make several modifications and improvements without departing from the concept of the present disclosure, which all fall within the protection scope of the present disclosure. Therefore, the protection scope of the patent of the present disclosure shall be subject to the appended claims.

## Claims

1. A positive electrode sheet (100), comprising a positive electrode current collector (10) and a coating structure (20) arranged on at least one side of the positive electrode current collector (10), the coating structure (20) comprising a first lithium supplementing layer (21), a positive electrode active material layer (22), and a second lithium supplementing layer (23) that are sequentially laminated, and the first lithium supplementing layer (21) being close to the positive electrode current collector (10), wherein the first lithium supplementing layer (21) comprises a first positive electrode lithium supplementing agent (210), the positive electrode active material layer (22) comprises a first positive electrode active material (221), and the second lithium supplementing layer (23) comprises a second positive electrode lithium supplementing agent (230) and a second positive electrode active material (231), wherein initial coulombic efficiency of the first positive electrode lithium supplementing agent (210) is less than 30%, and the second positive electrode lithium supplementing agent (230) is decomposable to release lithium ions and generate gas.

2. The positive electrode sheet (100) according to claim 1, wherein the first positive electrode lithium supplementing agent (210) is selected from one or more of Li₆CoO₄, Li₂MoO₃, Li₅FeO₄, Li₆MnO₄, Li₂NiO₂, Li₂CuO₂, Li₃PO₄, Li₄SiO₄, Li₂SiO₃, Li₃VO₄, Li₂VO₃, Li₅ReO₆, Li₂RuO₃, Li₂MnO₃, Li₂MoO₃, Li₂S, and LiF; and the second positive electrode lithium supplementing agent (230) is selected from one or more of Li₂CO₃, Li₃N, Li₂O₂, Li₂O, Li₂C₂O₄, Li₂C₄O₄, Li₂C₃O₅, and Li₂C₄O₆.

3. The positive electrode sheet (100) according to claim 1, wherein a ratio of a single-sided areal density of the first lithium supplementing layer (21) to a single-sided areal density of the coating structure (20) is 0.01 to 0.2; a ratio of a single-sided areal density of the positive electrode active material layer (22) to the single-sided areal density of the coating structure (20) is 0.1 to 0.9; and a ratio of a single-sided areal density of the second lithium supplementing layer (23) to the single-sided areal density of the coating structure (20) is 0.1 to 0.9.

4. The positive electrode sheet (100) according to any one of claims 1 to 3, wherein the single-sided areal density of the positive electrode active material layer (22) and/or the single-sided areal density of the second lithium supplementing layer (23) are/is greater than the single-sided areal density of the first lithium supplementing layer (21).

5. The positive electrode sheet (100) according to any one of claims 1 to 4, wherein the single-sided areal density of the first lithium supplementing layer (21) is 0.5 to 20 g/m²; and the single-sided areal density of the positive electrode active material layer (22) and the second lithium supplementing layer (23) is within a range of 50 to 500 g/m² respectively.

6. The positive electrode sheet (100) according to any one of claims 1 to 5, wherein a ratio of the single-sided areal density of the positive electrode active material layer (22) to the single-sided areal density of the second lithium supplementing layer (23) is within a range of 0.5 to 2.0.

7. The positive electrode sheet (100) according to any one of claims 1 to 6, wherein a single-sided thickness of the first lithium supplementing layer (21) is 1 to 20 µm.

8. The positive electrode sheet (100) according to any one of claims 1 to 7, wherein a single-sided thickness of the positive electrode active material layer (22) or the second lithium supplementing layer (23) is 20 to 200 µm.

9. The positive electrode sheet (100) according to any one of claims 1 to 8, wherein the first lithium supplementing layer (21) comprises a third positive electrode active material whose mass percent not exceeding a mass percent of the first positive electrode lithium supplementing agent (210).

10. The positive electrode sheet (100) according to any one of claims 1 to 9, wherein the first lithium supplementing layer (21) comprises components in the following mass percents: 50% to 90% of the first positive electrode lithium supplementing agent, 0% to 40% of a third positive electrode active material, 0.5% to 10% of a binder, and 0.5% to 10% of a conductive agent.

11. The positive electrode sheet (100) according to any one of claims 1 to 10, wherein in the second lithium supplementing layer (23), a total mass of the second positive electrode lithium supplementing agent (230) is 0.5% to 5% of a total mass of the second positive electrode active material (231).

12. The positive electrode sheet (100) according to claim 11, wherein a total mass percent of the second positive electrode active material (231) in the second lithium supplementing layer (23) is greater than 80%.

13. The positive electrode sheet (100) according to claim 11, wherein a total mass percent of the second positive electrode active material (231) in the second lithium supplementing layer (23) is greater than 90%.

14. The positive electrode sheet (100) according to any one of claims 1 to 13, wherein the second lithium supplementing layer (23) comprises n second lithium supplementing sublayers, and n≥2, wherein a mass ratio of a second positive electrode lithium supplementing agent to a second positive electrode active material in each of the second lithium supplementing sublayers shows an increasing trend in a direction from the positive electrode current collector (10) to the first lithium supplementing layer (21).

15. The positive electrode sheet (100) according to any one of claims 1 to 14, wherein the second lithium supplementing layer comprises the n second lithium supplementing sublayers, and n≥2, wherein the mass ratio of the second positive electrode lithium supplementing agent to the second positive electrode active material in each of the second lithium supplementing sublayers sequentially increases layer by layer in a direction from the positive electrode current collector (10) to the first lithium supplementing layer (21).

16. The positive electrode sheet (100) according to claim 14 or 15, wherein in the n second lithium supplementing sublayers, at least two adjacent layers satisfy: Aₘ/(Dₘ/Dₘ₋₁)-Aₘ₋₁≥5%,
wherein Aₘ₋₁ is a mass ratio of a second positive electrode lithium supplementing agent in an (m-1)^{th} second lithium supplementing sublayer to the total second positive electrode lithium supplementing agent in the second lithium supplementing layer (23), Aₘ is a mass ratio of a second positive electrode lithium supplementing agent in an m^{th} second lithium supplementing sublayer to the total second positive electrode lithium supplementing agent in the second lithium supplementing layer, Dₘ₋₁ is a thickness of the (m-1)^{th} second lithium supplementing sublayer, Dₘ is a thickness of the m^{th} second lithium supplementing sublayer, m is any integer from 2 to n, and on a same side of the positive electrode current collector (10), the (m-1)^{th} second lithium supplementing sublayer is closer to the positive electrode current collector (10) than the m^{th} second lithium supplementing sublayer.

17. The positive electrode sheet (100) according to any one of claims 1 to 16, wherein content of a lithium supplementing agent in the positive electrode active material layer (22) is less than or equal to 1%.

18. A lithium battery, comprising the positive electrode sheet according to any one of claims 1 to 17.

19. The lithium battery according to claim 18, comprising a negative electrode sheet, and a separator and an electrolyte that are provided between the negative electrode sheet and the positive electrode sheet.

20. An apparatus, comprising the lithium battery according to claim 18 or 19, wherein the apparatus is a power-consuming device or an energy storage system.
